# FASCICULE DE BREVET EUROPEEN

(11) **EP 2 873 992 B1**
(45) Date de publication et mention de la délivrance du brevet: **06.07.2016**
(21) Numéro de dépôt: 14193529.6
(22) Date de dépôt: 17.11.2014
(51) Int. Cl.: G02B 5/02, G02B 27/01, F21V 8/00, B60J 1/00

(54) **Système d'affichage d'une image sur un pare-brise**
Anzeigesystem eines Bilds auf einer Windschutzscheibe
System for displaying an image on a windscreen

(30) Priorité: 18.11.2013 FR 1361283
(43) Date de publication de la demande: 20.05.2015
(73) Titulaire: COMMISSARIAT A L'ENERGIE ATOMIQUE ET AUX ENERGIES ALTERNATIVES, 75015 Paris (FR)
(72) Inventeur: Rossini, Umberto, 38500 COUBLEVIE (FR)
(74) Mandataire: Thibon, Laurent

(56) Documents cités:
- WO-A1-2008/089992
- WO-A2-2009/074638
- DE-A1- 4 211 728
- US-A1- 2011 149 201
- US-B1- 7 982 959

## Description

### Domaine

La présente demande concerne l'affichage d'une image sur un pare-brise de véhicule automobile.

### Exposé de l'art antérieur

On a déjà proposé des systèmes dans lesquels une image est projetée, en projection directe, sur un film diffuseur transparent collé sur le pare-brise à l'intérieur du véhicule. De tels systèmes permettent de fournir à un occupant du véhicule des informations s'affichant en superposition de la scène extérieure visible à travers le pare-brise.

Les systèmes existants présentent toutefois divers inconvénients.

En particulier, un inconvénient est qu'une partie de la lumière projetée sur le film diffuseur est transmise par ce film, traverse le pare-brise, et se trouve projetée à l'extérieur du véhicule. Ceci pose problème dans certaines applications. Ceci rend notamment les systèmes existants incompatibles avec certains véhicules, par exemple militaires, dans lesquels, pour des raisons de confidentialité, il n'est pas acceptable que les informations projetées à l'attention des occupants du véhicule puissent être lues depuis l'extérieur du véhicule. En outre, ceci rend les systèmes existants incompatibles avec certains véhicules furtifs, dans lesquels la lumière transmise à travers le film diffuseur et le pare-brise pourrait rendre le véhicule facilement détectable.

Un autre inconvénient des systèmes existants réside dans leur encombrement. En effet, le. projecteur, situé à l'intérieur du véhicule, doit être placé en regard du film diffuseur, à une distance du pare-brise relativement importante pour permettre l'affichage d'une image de taille satisfaisante. Ceci impose des contraintes de positionnement, notamment pour garantir qu'aucun objet ou occupant du véhicule n'intercepte le faisceau lumineux lors de l'utilisation du système. Les habitacles de véhicules automobiles étant généralement des espaces relativement restreints et encombrés, ces contraintes de positionnement sont parfois difficiles à respecter.

Le document WO 2008/08 9992 A1 divulgue un système d'affichage utilisant un guide d'onde et un diffuseur. Le document DE 4211728 A1 divulgue un système d'affichage utilisant un pare-brise comme guide d'onde.

Il serait souhaitable de pouvoir disposer d'un système d'affichage d'une image sur un pare-brise, palliant au moins en partie certains des inconvénients des systèmes existants.

### Résumé

Ainsi, le mode de réalisation principal, tel que défini dans la revendication 1 prévoit un système d'affichage comprenant : un pare-brise de véhicule ; un projecteur situé du côté d'une première face du pare-brise et agencé pour permettre de projeter une image dans le pare-brise, en direction d'une deuxième face du pare-brise opposée à la première face, de façon que les angles d'incidence des rayons projetés sur la deuxième face soient supérieurs à l'angle limite de réflexion totale de la lumière sur la deuxième face ; et un diffuseur transmissif revêtant une zone de la première face située sur le trajet des rayons projetés après au moins une réflexion sur la deuxième face, dans lequel le projecteur est adapté à produire une image à une distance équivalente à la distance qui le sépare du diffuseur en passant par le trajet de propagation de la lumière en réflexion totale dans le pare-brise.

Selon un mode de réalisation additionel, le diffuseur est adapté à réfracter vers l'extérieur du pare-brise, côté première face, la lumière se propageant dans le pare-brise en provenance du projecteur.

Selon un autre mode de réalisation, le diffuseur est adapté à transmettre, en la diffusant, la lumière provenant du pare-brise à au moins une première longueur d'onde, et à transmettre, sans la diffuser la lumière provenant du pare-brise aux longueurs d'ondes autres que la première longueur d'onde.

Selon un autre mode de réalisation, la première longueur d'onde est une longueur d'onde d'émission du projecteur.

Selon un autre mode de réalisation, le projecteur comprend une source laser.

Selon un autre mode de réalisation, le projecteur est adapté à émettre de la lumière polarisée de type p par rapport à la deuxième face du pare-brise.

Selon un autre mode de réalisation, le diffuseur est un diffuseur holographique.

Selon un autre mode de réalisation, le système comporte en outre un dispositif d'injection, dans le pare-brise, de la lumière émise par le projecteur.

Selon un autre mode de réalisation, le dispositif d'injection comporte un prisme dont une face est en contact avec la première face du pare-brise.

Selon un autre mode de réalisation, le pare-brise est un pare-brise blindé comportant un empilement de plusieurs plaques d'un premier matériau transparent séparées deux à deux par des couches d'un deuxième matériau transparent.

Un autre mode de réalisation prévoit un véhicule automobile comportant un système d'affichage du type susmentionné.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe schématique illustrant un exemple d'un mode de réalisation d'un système d'affichage d'une image sur un pare-brise ; et
la figure 2 est une vue en coupe schématique partielle illustrant plus en détail le fonctionnement d'un exemple d'un mode de réalisation d'un système d'affichage d'une image sur un pare-brise.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ", et "quasiment" signifient "à 10% près". De plus, dans la présente demande, sauf indication contraire, le terme "transparent" est utilisé pour qualifier des éléments, matériaux, films, assemblages, etc., adaptés à laisser passer, sans déformation significative, la lumière du spectre visible ou de la quasi-totalité du spectre visible.

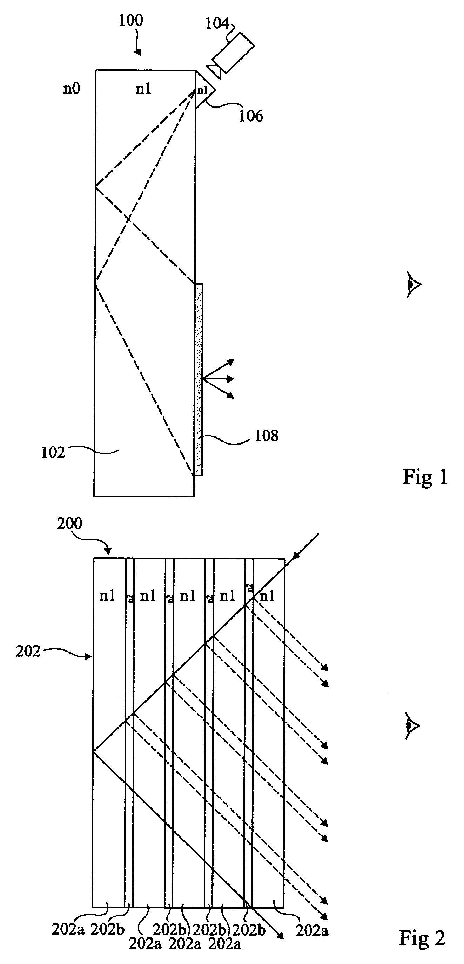

La figure 1 est une vue en coupe de côté illustrant schématiquement un exemple d'un mode de réalisation d'un système 100 d'affichage d'une image sur un pare-brise transparent 102.

Dans cet exemple, le système 100 comprend le pare-brise 102 lui-même. Le pare-brise 102 peut avoir une structure monocouche ou une structure multicouche. Il peut comprendre du verre, du polycarbonate, ou tout autre matériau transparent adapté à la réalisation d'un pare-brise. A titre d'exemple, le pare-brise 102 peut être un pare-brise blindé en verre feuilleté d'environ 7 à 10 cm d'épaisseur, constitué par un empilement de plusieurs plaques de verre séparées deux à deux par des couches intercalaires en polyvinyle de butyral (PVB). Dans l'exemple de la figure 1, on considère que le pare-brise 102 présente un même indice de réfraction n1 sur toute son épaisseur, c'est-à-dire que le pare-brise 102 est constitué d'un unique matériau transparent d'indice n1, ou d'un empilement de plusieurs matériaux distincts de même indice n1. Vu de face, le pare-brise 102 a par exemple une forme générale approximativement rectangulaire. A titre d'exemple non-limitatif, les faces du pare-brise 102 sont approximativement planes et parallèles entre elles.

Le système 100 comprend en outre un projecteur 104 situé à l'intérieur du véhicule, au voisinage d'un bord de la face intérieure du pare-brise 102, c'est-à-dire la face du pare-brise 102 tournée vers l'intérieur du véhicule. Dans l'exemple représenté, le projecteur 104 est situé au voisinage du bord supérieur (dans l'orientation de la figure) du pare-brise 102.

Selon un aspect des modes de réalisation décrits, le projecteur 104 est agencé pour permettre de projeter une image dans le pare-brise 102, en direction de la face extérieure du pare-brise 102 (c'est-à-dire sa face tournée vers l'extérieur du véhicule), de façon que l'angle d'incidence, sur la face extérieure du pare-brise, des rayons lumineux projetés dans le pare-brise, soit supérieur à l'angle limite de réflexion totale de la lumière sur la face extérieure du pare-brise. Le projecteur 104 peut être couplé à un dispositif d'injection et/ou d'orientation de la lumière projetée dans le pare-brise 102. Dans l'exemple représenté, le dispositif d'injection comprend un prisme 106 en un matériau de même indice n1 que le pare-brise 102, placé entre le projecteur 104 et le pare-brise 102 et ayant une face en contact avec le pare-brise 102. L'homme de l'art saura toutefois prévoir d'autres dispositifs permettant d'injecter une image dans le pare-brise 102 depuis l'intérieur du véhicule, de façon que l'angle d'incidence des rayons injectés soit supérieur à l'angle limite de réflexion totale de la lumière sur la face extérieure du pare-brise. On notera que le dispositif d'injection peut, le cas échéant, être intégré au pare-brise.

Si l'on désigne par n0 l'indice optique de l'environnement extérieur du véhicule (généralement de l'air), l'angle limite de réflexion totale, sur la face extérieure du pare-brise, de la lumière injectée dans le pare-brise, s'exprime par la formule θₗ = arcsinus(n0/n1). Si on considère un pare-brise en verre d'indice n1 = 1,5 et un environnement extérieur d'indice n0 = 1, l'angle θₗ est de l'ordre de 41,8 degrés. A titre d'exemple non limitatif, le projecteur 104 est agencé de façon que tous les rayons du cône de projection de l'image à afficher, injectés dans le pare-brise 102, atteignent la face extérieure du pare-brise 102 avec un angle d'incidence compris entre 45 et 65 degrés.

En fonctionnement, la lumière émise par le projecteur 104 et injectée dans le pare-brise 102 se réfléchit totalement sur la face extérieure du pare-brise au moins une fois.

Selon un autre aspect des modes de réalisation décrits, le système 100 comprend en outre un diffuseur transmissif 108, revêtant une zone de la face intérieure du pare-brise 102 située sur le trajet de la lumière injectée dans le pare-brise par le projecteur 104, après une ou plusieurs (une seule dans l'exemple représenté) réflexions totales de cette lumière sur la face extérieure du pare-brise 102.

Le diffuseur 108 a notamment pour fonction de dévier (réfracter) la lumière injectée dans le pare-brise par le projecteur 104, de façon que cette lumière ne subisse pas de réflexion totale sur la zone de la face intérieure du pare-brise revêtue par le diffuseur. En l'absence du diffuseur 108, la lumière émise par le projecteur 104 resterait confinée dans le pare-brise 102, et continuerait de s'y propager en réflexion totale alternativement sur la face extérieure et sur la face intérieure du pare-brise. En d'autres termes, le diffuseur 108 a pour fonction d'extraire du pare-brise, côté face intérieure du pare-brise, l'image injectée par le projecteur 104.

Le diffuseur 108 a en outre pour fonction de transmettre la lumière extraite vers l'intérieur du véhicule, en la diffusant plus ou moins fortement. Le diffuseur 108 forme ainsi un écran sur lequel une image produite par le projecteur 104 peut être affichée en rétroprojection. L'image affichée est alors visible depuis l'intérieur du véhicule et invisible depuis l'extérieur, le diffuseur 108 étant uniquement transmissif et non réflectif.

Le projecteur 104 peut être un projecteur à balayage équipé d'une source laser, un vidéoprojecteur à LED miniaturisé, ou tout autre type de projecteur adapté. Le projecteur 104 génère par exemple une image focalisée à une distance équivalente à la distance qui sépare le projecteur 104 du diffuseur 108, en passant par le trajet de propagation de la lumière en réflexion totale dans le pare-brise entre le projecteur 104 et le diffuseur 108.

Pour ne pas altérer la vision de la scène extérieure par les occupants du véhicule, le diffuseur 108 est de préférence transparent ou quasi-transparent pour la lumière provenant de l'extérieur du véhicule. Pour cela, on choisit de préférence un diffuseur transmissif 108 actif uniquement dans une ou des gammes de longueurs d'ondes restreintes, correspondant à des longueurs d'ondes d'émission du projecteur 104. A titre d'exemple, le diffuseur 108 est actif uniquement dans une bande spectrale de largeur à mi-hauteur inférieure à 50 nm. Pour les autres longueurs d'ondes, le diffuseur 108 est transparent et ne diffuse pas la lumière provenant du pare-brise. Dans un mode de réalisation préféré, le projecteur 104 et le diffuseur 108 sont monochromatiques. De préférence, les longueurs d'ondes auxquelles le diffuseur 108 est actif sont des longueurs d'ondes peu ou pas présentes dans la scène extérieure. Le diffuseur 108 est par exemple un diffuseur holographique, c'est-à-dire qu'il est réalisé par enregistrement holographique d'une fonction optique sur une plaque photosensible. L'enregistrement holographique de l'élément diffuseur est de préférence effectué à la même longueur d'onde que celle du projecteur 104. La plaque photosensible est de préférence réalisée en un matériau photo-réfractif, c'est-à-dire un matériau dont l'indice optique varie en fonction de l'intensité avec laquelle il a été insolé. Les franges d'interférences formées pendant l'enregistrement holographique créent ainsi des variations d'indice dans la plaque photosensible, qui permettront de reproduire ultérieurement la fonction optique enregistrée. A titre d'exemple, lors de l'enregistrement holographique, un ensemble de plusieurs miroirs de Bragg est créé dans la plaque photosensible, permettant de reproduire ultérieurement la fonction de diffusion souhaitée.

A titre d'exemple non limitatif de dimensionnement du système de la figure 1, si on considère un pare-brise d'environ 420 mm de hauteur et 95 mm d'épaisseur, un cône de projection de l'image dans le pare-brise formant des angles d'incidence sur la face arrière du pare-brise allant de 45 à 60 degrés, et un système à une seule réflexion totale de l'image sur la face extérieure du pare-brise, on peut afficher, sur la face intérieure du pare-brise, une image d'approximativement 140 mm de hauteur située dans la moitié inférieure du pare-brise. On notera qu'en pratique, le nombre de réflexions totales sur la face extérieure du pare-brise, et/ou l'ouverture du cône de projection de l'image dans le pare-brise peuvent être ajustés en fonction des dimensions du pare-brise et/ou de la taille souhaitée de la zone d'affichage.

La figure 2 est une vue en coupe schématique partielle illustrant plus en détail le fonctionnement d'un exemple de réalisation d'un système 200 d'affichage d'une image sur un pare-brise 202. Le système de la figure 2 diffère du système de la figure 1 uniquement par la nature du pare-brise 202. Les autres éléments du système de la figure 2 peuvent être similaires ou identiques à ce qui a été décrit en relation avec la figure 1, et ne seront pas décrits à nouveau ci-après.

Dans l'exemple de la figure 2, le pare-brise 202 est un pare-brise en verre feuilleté constitué par un empilement de plusieurs plaques 202a d'un premier matériau transparent, par exemple du verre, séparées deux à deux par des couches intercalaires 202b en un second matériau transparent, par exemple du polyvinyle de butyral (PVB). Dans l'exemple de la figure 2, à la différence de ce qui a été considéré dans l'exemple de la figure 1, les plaques 202a et les couches 202b n'ont pas strictement le même indice de réfraction. En effet, bien que les pare-brises à structure multicouche soient généralement réalisés avec des matériaux d'indices optiques aussi proches que possible, il peut subsister un léger écart d'indice entre les différents matériaux utilisés. Dans cet exemple, on désigne par n1 l'indice optique des plaques 202a, et par n2 l'indice optique des couches intercalaires 202b.

Comme cela a été représenté par des traits en pointillés sur la figure 2, les rayons lumineux injectés dans le pare-brise par le projecteur 104 (non visible sur la figure 2) sont susceptibles de subir des réflexions parasites aux interfaces successives entre les plaques d'indice n1 et les couches d'indice n2.

Pour minimiser ces réflexions parasites, on utilise de préférence un projecteur émettant de la lumière polarisée de type p par rapport aux plans successifs d'interface entre les plaques d'indice n1 et les couches d'indice n2, c'est-à-dire de la lumière polarisée rectilignement selon une direction parallèle à ces plans. En effet, la lumière polarisée de type p est moins sujette aux réflexions parasites que la lumière polarisée de type s, c'est-à-dire polarisée rectilignement selon une direction orthogonale aux plans d'interface n1/n2 ou n2/n1. On notera que, à l'angle de Brewster des dioptres n1/n2 ou n2/n1, les réflexions parasites de la lumière polarisée de type p s'annulent. L'angle de Brewster est donné par la formule θ_{B1} = arctan(n2/n1) pour le dioptre n1/n2, et θ_{B2} = arctan(n1/n2) pour le dioptre n2/n1. A titre d'exemple, si n1 = 1,49 et n2 = 1,47, alors l'angle de Brewster pour un rayon se propageant du milieu n1 vers le milieu n2 est de l'ordre de 44,6 degrés, et l'angle de Brewster pour un rayon se propageant du milieu n2 vers le milieu n1 est de l'ordre de 45,4 degrés. Lorsque l'on s'éloigne de l'ange de Brewster, le coefficient de réflexion parasite augmente progressivement. Pour minimiser les réflexions parasites, on peut choisir de restreindre l'angle d'ouverture du faisceau de projection de l'image dans le pare-brise, de façon que le coefficient de réflexion de la lumière polarisée de type p sur les dioptres n1/n2 ou n2/n1 ne dépasse pas un certain seuil, par exemple de l'ordre de 0,03%. Dans l'exemple susmentionné avec n1 = 1,49 et n2 = 1,47, le coefficient de 0,03% est atteint pour des angles d'incidence d'environ 60 degrés. Si l'écart entre les indices n1 et n2 diminue, on peut prévoir d'augmenter l'ouverture du cône de projection, et donc la taille de l'image affichée.

Un avantage des modes de réalisation décrits est qu'ils permettent d'afficher, sur un pare-brise de véhicule automobile, des informations à l'attention des occupants du véhicule, sans que la lumière utilisée pour afficher ces informations ne soit détectable à l'extérieur du véhicule, et sans que les informations provenant de l'extérieur ne soient altérées de façon significative.

Un autre avantage réside dans le faible encombrement du système d'affichage. En effet, dans les modes de réalisation décrits, le projecteur peut être disposé au voisinage immédiat du pare-brise, par exemple au niveau d'un bord du pare-brise, sans qu'il ne soit nécessaire de prévoir une distance significative entre le projecteur et le pare-brise.

Des modes de réalisation particuliers ont été décrits. Diverses variantes et modifications apparaîtront à l'homme de l'art. En particulier, les modes de réalisation décrits ne se limitent pas aux exemples numériques de dimensionnement susmentionnés.

## Revendications

1. Système d'affichage (100 ; 200) comprenant :
un pare-brise (102 ; 202) de véhicule ;
un projecteur (104) situé du côté d'une première face du pare-brise (102 ; 202) et agencé pour permettre de projeter une image dans le pare-brise (102 ; 202), en direction d'une deuxième face du pare-brise (102 ; 202) opposée à la première face, de façon que les angles d'incidence des rayons projetés sur la deuxième face soient supérieurs à l'angle limite de réflexion totale de la lumière sur la deuxième face ; et
un diffuseur (108) transmissif revêtant une zone de la première face située sur le trajet des rayons projetés après au moins une réflexion sur la deuxième face,
**caractérisé en ce que** le projecteur (104) est adapté à produire une image à une distance équivalente à la distance qui le sépare du diffuseur (108) en passant par le trajet de propagation de la lumière en réflexion totale dans le pare-brise (102 ; 202).

2. Système (100 ; 200) selon la revendication 1, dans lequel le diffuseur (108) est adapté à réfracter vers l'extérieur du pare-brise, côté première face, la lumière se propageant dans le pare-brise (102 ; 202) en provenance du projecteur (104).

3. Système (100 ; 200) selon la revendication 1 ou 2, dans lequel le diffuseur (108) est adapté à transmettre, en la diffusant, la lumière provenant du pare-brise à au moins une première longueur d'onde, et à transmettre, sans la diffuser la lumière provenant du pare-brise aux longueurs d'ondes autres que ladite au moins une première longueur d'onde.

4. Système (100 ; 200) selon la revendication 3, dans lequel ladite au moins une première longueur d'onde est une longueur d'onde d'émission du projecteur (104).

5. Système (100 ; 200) selon l'une quelconque des revendications 1 à 4 dans lequel le projecteur (104) comprend une source laser.

6. Système (100 ; 200) selon l'une quelconque des revendications 1 à 5, dans lequel le projecteur (104) est adapté à émettre de la lumière polarisée de type p par rapport à la deuxième face du pare-brise.

7. Système (100 ; 200) selon l'une quelconque des revendications 1 à 6, dans lequel le diffuseur (108) est un diffuseur holographique.

8. Système (100 ; 200) selon l'une quelconque des revendications 1 à 7, comportant en outre un dispositif d'injection, dans le pare-brise (102 ; 202), de la lumière émise par le projecteur (104).

9. Système (100 ; 200) selon la revendication 8, dans lequel le dispositif d'injection comporte un prisme (106) dont une face est en contact avec la première face du pare-brise (102 ; 202).

10. Système (100 ; 200) selon l'une quelconque des revendications 1 à 9, dans lequel le pare-brise (102 ; 202) est un pare-brise blindé comportant un empilement de plusieurs plaques d'un premier matériau transparent séparées deux à deux par des couches d'un deuxième matériau transparent.

11. Véhicule automobile comportant un système d'affichage (100 ; 200) selon l'une quelconque des revendications 1 à 10.

## Patentansprüche

1. Ein Anzeigesystem (100; 200), wobei das Anzeigesystem Folgendes aufweist:
eine Fahrzeug-Windschutzscheibe (102; 202);
einen Projektor (104), der an der Seite einer ersten Oberfläche der Windschutzscheibe (102; 202) angeordnet ist und geeignet ist eine Projektion eines Bildes in der Windschutzscheibe (102; 202) zu aktivieren, in Richtung einer zweiten Oberfläche der Windschutzscheibe (102; 202), die gegenüber der ersten Oberfläche liegt, derart, dass die Einfallswinkel der Strahlen, die auf die zweite Oberfläche projiziert werden, größer sind als der Grenzwinkel für eine Totalreflexion von Licht auf der zweiten Oberfläche; und
einen lichtdurchlässigen Diffusor (108), der einen Bereich der ersten Oberfläche abdeckt und der auf einem Pfad der projizierten Strahlen nach wenigstens einer Reflexion auf der zweiten Oberfläche angeordnet ist,
**dadurch gekennzeichnet, dass** der Projektor (104) geeignet ist ein Bild in einem Abstand zu erzeugen, der gleich ist dem Abstand, der ihn von dem Diffusor (108) trennt, entlang des Ausbreitungspfades von Licht in Totalreflexion in der Windschutzscheibe (102; 202).

2. Das System (100; 200) nach Anspruch 1, wobei der Diffusor (108) geeignet ist das Licht von dem Projektor (104), das sich in der Windschutzscheibe (102; 202) ausbreitet, auf der ersten Oberflächenseite in Richtung der Außenseite der Windschutzscheibe zu brechen.

3. Das System (100; 200) nach Anspruch 1 oder 2, wobei der Diffusor (108) geeignet ist das Licht, das von der Windschutzscheibe kommt mit wenigstens einer ersten Wellenlänge auszusenden, indem es gestreut wird und das Licht, das von der Windschutzscheibe kommt mit Wellenlängen, die unterschiedlich zu der wenigstens einen ersten Wellenlänge sind, auszusenden, indem es nicht gestreut wird.

4. Das System (100; 200) nach Anspruch 3, wobei die wenigstens eine erste Wellenlänge eine Emissionswellenlänge des Projektors (104) ist.

5. Das System (100; 200) nach einem der Ansprüche 1 bis 4, wobei der Projektor (104) eine Laserquelle aufweist.

6. Das System (100; 200) nach einem der Ansprüche 1 bis 5, wobei der Projektor (104) geeignet ist Licht zu emittieren, das eine p-Typ Polarisation bezüglich der zweiten Oberfläche der Windschutzscheibe aufweist.

7. Das System (100; 200) nach einem der Ansprüche 1 bis 6, wobei der Diffusor (108) ein holographischer Diffusor ist.

8. Das System (100; 200) nach einem der Ansprüche 1 bis 7, wobei das System ferner ein Gerät aufweist zum Einspeisen des Lichts in die Windschutzscheibe (102; 202), das von dem Projektor (104) emittiert wurde.

9. Das System (100; 200) nach Anspruch 8, wobei das Einspeisungsgerät ein Prisma (106) mit einer Oberfläche aufweist, die in Kontakt mit der ersten Oberfläche der Windschutzscheibe (102; 202) ist.

10. Das System(100; 200) nach einem der Ansprüche 1 bis 9, wobei die Windschutzscheibe (102; 202) eine gepanzerte Windschutzscheibe ist, die einen Stapel einer Vielzahl von Platten eines ersten transparenten Materials aufweist, wobei zwei Lagen von den nächsten zwei Lagen durch ein zweites transparentes Material getrennt sind.

11. Ein Motorfahrzeug, wobei das Fahrzeug das Anzeigesystem (100; 200) nach einem der Ansprüche 1 bis 10 aufweist.

## Claims

1. A display system (100; 200) comprising:
a vehicle windshield (102; 202);
a projector (104) located on the side of a first surface of the windshield (102; 202) and arranged to enable to project an image in the windshield (102; 202), towards a second surface of the windshield (102; 202) opposite to the first surface, so that the angles of incidence of the rays projected on the second surface are greater than the angular limit of total reflection of light on the second surface; and
a transmissive diffuser (108) coating an area of the first surface located on the path of the projected rays after at least one reflection on the second surface,
**characterized in that** the projector (104) is capable of generating an image at a distance equivalent to the distance which separates it from the diffuser (108), following the propagation path of light in total reflection in the windshield (102; 202).

2. The system (100; 200) of claim 1, wherein the diffuser (108) is capable of refracting towards the outside of the windshield, on the first surface side, the light propagating in the windshield (102; 202) from the projector (104).

3. The system (100; 200) of claim 1 or 2, wherein the diffuser (108) is capable of transmitting, by diffusing it, the light originating from the windshield at at least one first wavelength, and of transmitting, without diffusing it, the light originating from the windshield at wavelengths other than said at least one first wavelength.

4. The system (100; 200) of claim 3, wherein said at least one first wavelength is an emission wavelength of the projector (104).

5. The system (100; 200) of any of claims 1 to 4, wherein the projector (104) comprises a laser source.

6. The system (100; 200) of any of claims 1 to 5, wherein the projector (104) is capable of emitting light having a p-type polarization with respect to the second surface of the windshield.

7. The system (100; 200) of any of claims 1 to 6, wherein the diffuser (108) is a holographic diffuser.

8. The system (100; 200) of any of claims 1 to 7, further comprising a device of injection, into the windshield (102; 202), of the light emitted by the projector (104).

9. The system (100; 200) of claim 8, wherein the injection device comprises a prism (106) having a surface in contact with the first surface of the windshield (102; 202).

10. The system (100; 200) of any of claim 1 to 9, wherein the windshield (102; 202) is an armored windshield comprising a stack of a plurality of plates of a first transparent material separated two by two by layers of a second transparent material.

11. A motor vehicle comprising the display system (100; 200) of any of claims 1 to 10.
